# EUROPEAN PATENT APPLICATION

(11) **EP 4 796 467 A1**
(43) Date of publication of application: **26.08.2026**
(21) Application number: 26159140.8
(22) Date of filing: 17.02.2026
(51) Int. Cl.: B65G 37/00, B65G 54/02, H02K 41/03

(54) **PLANT AND PROCESS FOR TREATING AND MOVING CABLES ALONG A CLOSED PATH**

(30) Priority: 19.02.2025 EP 25158746
(71) Applicant: Societa' per Azioni Curti - Costruzioni Meccaniche, 48014 Castel Bolognese (RA) (IT)
(72) Inventor: BALDRATI, Andrea, 48014 Castel Bolognese (RA) (IT)
(74) Representative: Gislon, Gabriele

(57) **Abstract**

Apparatus (1) comprising a closed track (2), and objects (3) movable along said closed track (2), said track (2) comprising an operative portion (21) provided with two ends (21a, 21b), and a return portion (22, 23, 24), said objects (3) comprising at least one magnetic element (33a, 33b), said apparatus (1) comprising a linear electric motor (5) adapted to move said objects (3) along at least part of said operative portion (21), and at least one movable magnetic attractor (4, 6a, 6b) movable along a path (40) which has a portion parallel to at least part of the return portion (22, 23, 24) of said track (2), the movable magnetic attractor being adapted to move said objects (3) along at least part of the return portion (22, 23, 24) of said track (2).

## Description

The present invention relates to an apparatus and process for moving objects along a closed path, which comprises an operative portion.

These objects are typically movement units or *movers,* that is to say components configured to carry other elements along the operative portion to one or more sites where those elements are machined. The movers must therefore be precisely controlled along the operative portion and are therefore usually moved by a linear electric motor or a plurality of electric motors. At the end of the operative portion, the elements carried by the movers can be released therefrom, and the movers must be returned to the beginning of the operative portion and provided with another element for its subsequent machining along the operative portion. The linear motor is then typically configured so as to return the movers to the beginning of the operative portion.

A typical example is an apparatus for machining, i.e. processing, cable ends.

Such products, known in the art, prove to be very accurate in their operations but are nevertheless particularly expensive, due to the high cost of the linear motor.

It is therefore object of the present invention to provide an apparatus and process for moving objects along a closed path which is more economical than known systems, and at the same time can provide similar performance to known systems.

These and other objects are achieved by the present invention according to one or more of the appended claims.

In particular, a plant, an apparatus and a process according to the appended independent claims are object of the present invention, whereas preferred aspects are set forth in the dependent claims.

In particular, an object of the present invention relates to an apparatus comprising a closed track and objects moving along the closed track, the track comprising an operative portion provided with two ends, at least one linear electric motor to move the objects along at least part of the mentioned operative portion, and a return portion configured to move the objects between the two ends of the operative portion. The objects are preferably movers in an apparatus for machining ends of an electrical cable. The objects comprise at least one magnetic element, and the apparatus comprises at least one magnetic attractor which is movable along a path having a portion parallel to at least part of the return portion of the track and which is configured to move said objects along at least part of the return portion of said track.

Magnetic elements are elements suitable to interact with a magnetic field. The magnetic elements are selected from permanent magnets and ferromagnetic elements, preferably they are permanent magnets.

"Magnetic attractor" refers to an element configured to interact magnetically with the magnetic elements of the objects (or movers). Thus, the magnetic attractors can be magnets or ferromagnetic elements. Preferably, the magnetic attractors are ferromagnetic elements, particularly metal components. It is noted that the magnetic attractors are tailored to the magnetic elements of the objects; in other words, if the magnetic elements are magnets, the magnetic attractors can be magnets or ferromagnetic elements. If the magnetic elements are ferromagnetic (i.e. made of a ferromagnetyic material), the magnetic attractors are magnets, preferably permanent magnets.

Thus, the apparatus is configured so that, when a movable magnetic attractor is arranged at the at least one magnetic element of the object, particularly a mover, the movement of the movable magnetic attractor and the magnetic interaction between the movable magnetic attractor and at least one magnetic element of an object cause that object to be moved along at least part of the return portion of the track.

Therefore, thanks to the present solution, the objects are moved in the return portion of the track by a simple and inexpensive system, that is, they are dragged along the path by means of one or more movable magnetic attractors. While the use of electric movable magnetic attractors and electric magnetic elements, i.e., electromagnets, is not excluded, the magnetic elements of the objects and the at least one movable magnetic attractor are preferably passive elements, which do not require external power supply to be operated.

The invention also relates to a plant for machining electrical cables incorporating the above discussed apparatus. In particular, the plant comprises an apparatus for moving cables, and one or more working stations arranged at an operative portion of the track, configured to machine cable ends. The apparatus comprises a closed track, and objects movable along the closed track, the track comprising an operative portion being arranged at said working stations, provided with two ends, and a return portion. The objects comprise at least one magnetic element, and the apparatus comprises at least one linear electric motor comprising an electromagnetic stator configured to translate the object along at least part of the operative portion, so as to place the objects at the working stations, and at least one movable magnetic attractor movable along a path, the path having a portion parallel to at least part of the return portion of the track. The at least one movable magnetic attractor is configured to interact magnetically with the magnetic elements of the objects so as to move the objects along at least part of the return portion of the track without contacting the objects, wherein the objects are movable movers equipped with retaining elements to retain electrical cables.

The following aspects relate to the apparatus and/or to the plant above discussed.

According to an aspect, the return portion of the apparatus comprises a linear portion provided with two ends, and two connecting portions, each connecting portion connecting an end of the operative portion to an end of the linear portion of the return portion; the movable magnetic attractors comprising primary movable magnetic attractors for moving objects at least along said linear portion of the return portion of the track.

According to an aspect, the apparatus comprises secondary movable elements, that are movable at the connecting portions so that, when a secondary movable magnetic attractor is arranged at the at least one magnetic element of an object, the movement of the secondary movable magnetic attractor and the magnetic interaction between secondary movable magnetic attractor and at least one magnetic element of an object between said objects, cause that object to be moved along the respective connecting portion of said track.

This allows the objects to be moved in an easy an inexpensive way, even at the connecting portions of the track. While it is possible to provide a path of the movable magnetic attractors such that a single magnetic attractor can move a respective object along the entire return portion, it is preferable to provide different magnetic attractors driven independently of each other, each configured to move an object along part of the return portion, depending on the geometry of that return portion.

According to a possible aspect, the connecting portions are substantially semicircular, and each secondary movable magnetic attractor is movable along a circular path by rotating about a pivot, each movable magnetic attractor being arranged at a distance from the pivot, preferably by means of a crank mounted in a rotating manner on that pivot.

The apparatus further comprises at least one linear electric motor configured to move the objects along the operative portion of the track, i.e. the portion of the track along which the working stations are located on the relevant part of the plant. A linear electric motor allows the position and movement of the objects to be accurately controlled.

According to an aspect of the invention, in the apparatus there is provided a gap (S) between the movable magnetic attractors (4, 6a, 6b) and the at least one magnetic element (33a, 33b) present on the object, so that the objects (3) do not come into contact with the movable magnetic attractors (4, 6a, 6b). In other words, the movable attractors are spaced from the at least one magnetic element (33a, 33b) present on the object whereby the objects are moved without being engaged in a mechanical way.

The technical effect of the presence of a gap, i.e. of the said spacing between the movable attractor and the object's magnetic element, is that the transfer of the object from the movable magnetic attractor to the linear motor is carried out in an easy and flawless manner whereby the precision of the position on the linear motor is not jeopardized.

It is believed that the claimed way of moving, i.e. translating, by magnetic means the objects, namely cable movers in a cable machining, i.e. processing, plant, along the return portion of the apparatus surprisingly results in the said flawless passage from the return portion to the linear motor of the operative portion. It is noted that the at least one magnetic element (33a, 33b) present on the object is spaced from the magnetic part of the linear motor, as disclosed in the following description.

Another advantage is that the objects, namely the movers, can be moved independently from each other in an asynchronous and pitch-free manner. As an example more that one object 3 may be located at the end 22a of the linear portion of the return portion 22 until a movable magnetic attractor 4 is brought there to transfer the object to the opposite end 22b of the said linear portion.

Thus, thanks to the present solution, the apparatus is an optimal combination between cost and precision, since the linear electric motor, i.e., the most expensive element configured to control the movement of the objects, is limited to only the zone of the track that requires high precision in controlling the position of the objects themselves and the return portion is made in a way that does not take away precision of positioning at the beginning of and along the operative portion. It should be noted that a linear electric motor to move an object along a portion of the track has been described. As mentioned, a linear electric motor is typically configured as an electromagnetic stator configured to translate, i.e. move, an object provided with a magnetic element along the said motor. The linear electric motor, and in particular the stator thereof, in a known way, is typically composed of several components, which are arranged in series. Typically, such components are arranged in series along a straight line, so that an object travels along the stator along a straight line.

However, it is known in the art to arrange part of the stator components so that curves are formed in the path. Since the stator of the electric motor does not rotate, it is common in the art to refer to such a motor as a "linear motor," even if the path of an object along that motor is not exclusively a straight line.

On the other hand, this situation is that of the known art previously discussed, in which the stators of the linear motor were arranged along a closed path comprising two straight portions and two semicircular connecting portions, like an oval race track. Therefore, according to a possible aspect, the operative portion of the track is linear, that is, it allows the objects to be moved along a straight line, although embodiments in which in the operative portion of the path of the objects there are curves are not excluded.

According to a possible aspect, the track is in the form of a rail and the objects comprise wheels that are configured to rotate along the track. The wheels are preferably arranged so as to constrain the object to the track. Typically, the wheels are arranged so that the track is sandwiched between wheels which are opposite each other. This allows the object to be kept constrained to the track in the case of a track substantially vertically arranged, so that for at least part of the track, typically in the return portion, the objects face the ground or the support surface of the apparatus.

According to a possible aspect, the objects comprise at least two magnetic elements arranged within a seat, and the apparatus is configured so that the movable magnetic attractors are provided within this seat, so that they are arranged between said two magnetic elements. According to a possible aspect, the primary movable magnetic attractors are constrained to a conveyor belt moving along a closed path.

According to a possible aspect, the apparatus is modular. In particular, as mentioned, the linear motor can be made of different elements arranged in series. As a result, the operative portion of the track of the apparatus can be built via several elements or blocks, each block being a portion of the final electric linear motor.

A modular apparatus can be built, so that the apparatus comprises a plurality of modules that carry one or more elements of the linear motor, and part of the return portion of the track-

As mentioned, the linear portion of the return portion of the track can comprise one or more belts, on which the magnetic attractors are mounted.

In such a solution, each module of the apparatus carries its own belt. The belt is usually longer than a single element of the linear motor, so that the same module can comprise one belt and a plurality of elements of the linear electric motor that together form a portion of the electric linear motor.

Since the apparatus can be modular, the plant can be made modular too. As a result, in a modular solution of a plant, a single module of a plant can comprise one or more (usually a plurality of) work station, part of the return portion of the track, usually a belt carrying one or more magnetic attractors for the return portion of the track, a portion of the linear electric motor for the operative portion of the track, usually comprising a plurality of elements of the linear motor. The semicircular, or in any case curved, portions of the return portion of the track are usually made in a single and separate module.

Preferably, the objects are so-called cable movers that carry portions of cables, and the working stations are working stations for processing at least one end of said cables.

An object of the present invention further relates to a process for machining, i.e. processing, cables, by moving objects carrying a cable along a closed track by means of an apparatus according to the invention and machining, i.e. processing, the cable ends at the working station of the plant, wherein the cables being machined are handled by the linear motor.

According to an aspect, the speed of the magnetic attractors can be modified according to the speed and/or position of the objects in the operative portion of the track.

In particular, as mentioned, in the operative portion of the track, each object can be controlled independently from the others. Thanks to this, the speed of each object may vary along the operative portion of the track, e.g. as a function of the operation carried out on the elements, usually the cables, handled by the objects. The objects are thus handled with different speed over time. Also, the distance between two subsequent objects may vary over time, in the operative portion of the track.

In the return portion of the track, the speed of the magnetic attractors can be varied according to the current situation (e.g. speed, distance, number) of the objects that are currently present in the operative portion of the track.

Considering the embodiment wherein at least part of the magnetic attractors is mounted on a belt, the movement speed of the belt can be e.g. reduced to accumulate as much objects as possible in the return portion of the track lower part, or accelerated to maintain more objects in the operative portion of the track. These variations may be due to a particular situation of the operative portion (e.g. due to working stations carrying out longer or shorter operations that usual), or in specific circumstances, such as emptying the apparatus at the end of production, a change in the format of the objects (e.g. when different cables are to be handled), maintenance, etc.

Also, as mentioned, the magnetic attractors are usually moved in a continuous manner, i.e. they do not stop, so that they move along their path, independently from the fact that they interact with an object. As a result, when many objects are present in the lower part, more magnetic attractors interact (i.e. "pick up") an object, and vice-versa. As a consequence, the distance between subsequent objects in the return portion may vary over time. As an example, at a first time two objects can be moved by two subsequent magnetic attractors. In a subsequent second time (e.g. when changing belt, if multiple belts are used, or in a subsequent passage of the object in the return portion of the track), the same two objects can be moved by two magnetic attractors having a further (empty) magnetic attractor interposed. In such a case, in the second time, the distance between the object is substantially twice the distance between the objects had in the first time.

Referring to the attached figures, exemplary and non-limiting embodiments of the present invention are described, in which (it should be noted that in the figures, the direction of object movement is counterclockwise):
- Figure 1 is a perspective view of an apparatus according to an embodiment of the present invention;
- Figure 2 is an enlarged view of a detail of Figure 2, with some elements removed;
- Figure 3 is a further enlarged view of a detail of Figure 2;
- Figure 4 is a view of a detail of Figure 2, with some elements removed, including the case of the motor that powers the conveyor belts;

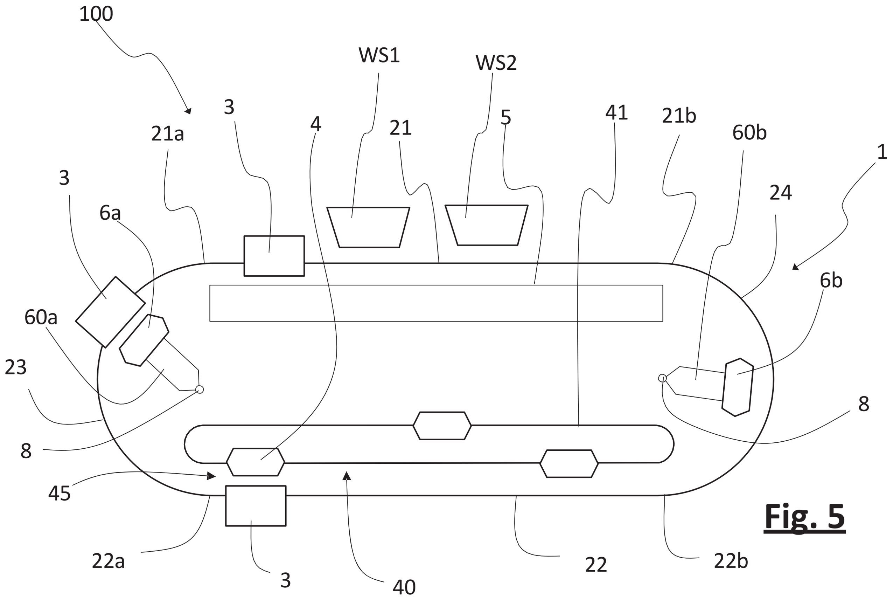

- Figure 5 is a schematic view of components of a plant according to an embodiment of the present invention;
- Figure 6 is a schematic view of the arrangement of the magnetic elements on an object of a possible embodiment of the present invention;
- Figure 7 is a schematic view of the inclined arrangement of the apparatus with respect to the ground in use condition.

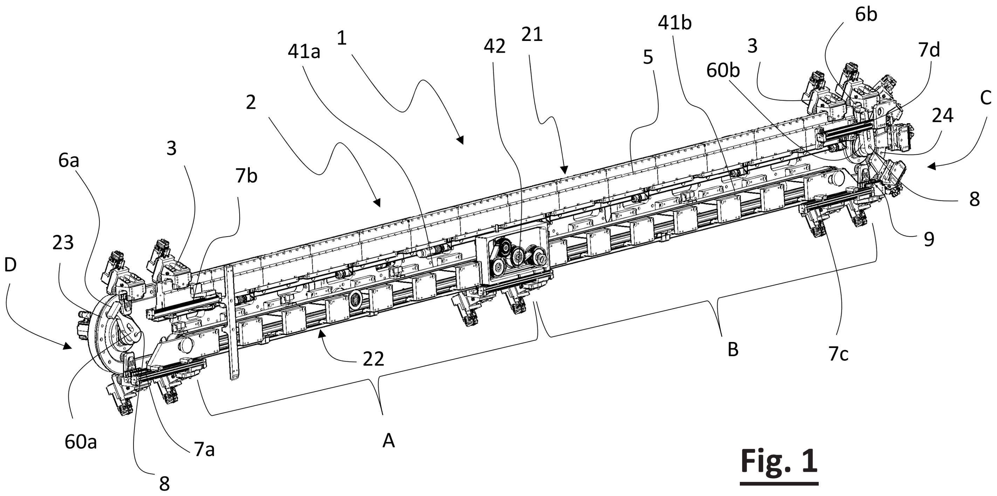

According to the invention, an apparatus 1 comprises a closed track 2 and objects 3 movable along the closed track 2. The apparatus shown in Fig. 1, as more fully discussed below, is configured to be used as a transfer for movers in a plant 100 for processing, i.e. machining, ends of electrical cables.

Specifically, the track 2 comprises an operative portion 21 provided with two ends 21a, 21b, a linear return portion 22, 23, 24. Typically, the track 2 consists of these two portions, i.e. every part of the track 2 that is not within the operative portion, is part of the return portion. Preferably, the return portion comprises a linear portion 22 provided with two ends 22a, 22b, and two connecting portions 23, 24. In more detail, the first connecting portion 23 connects the first end 21a of the operative portion 21 to the first end 22a of the linear portion 22, whereas the second connecting portion 24 connects the second end 21b of the operative portion 21 to the second end 22b of the linear portion 22.

The track 2 is made in a manner known in the art and typically has the form of a rail, or guide, along which the objects 3 can roll by means of wheels 31.

The shape of the objects 3 can vary between different embodiments. The objects 3 are typically configured to carry other components along the track 2. For example, as in the embodiment shown, the objects may comprise connections 32 configured to connect the objects to other components. Preferably, the connections are in the form of elements configured to retain the ends of a cable and, in that case, are preferably shaped like clamps. Therefore, the objects 3 shown in the figures are configured to be used as movers along an apparatus 1, i.e., a so-called transfer, in a cable machiningplant, particularly for machining, i.e. processing, the ends of electrical cables.

In such a plant, the apparatus 1 can be arranged in a vertical or inclined condition relative to the ground. In other words, in an embodiment, the longitudinal plane P of the apparatus 1, i.e., the transfer device 1, is advantageously arranged to be inclined with respect to the ground T when the transfer device is in use conditions, i.e., it is in use. In an embodiment, the longitudinal plane P of the apparatus 1, i.e., the transfer device 1, is arranged vertical to the ground T when the transfer device is in use conditions, i.e., is in use. It is evident from the above disclosure that "inclined" means placed at an angle, that is not 0° (i.e. not parallel) nor 90° (i.e. not vertical), with respect to the ground.

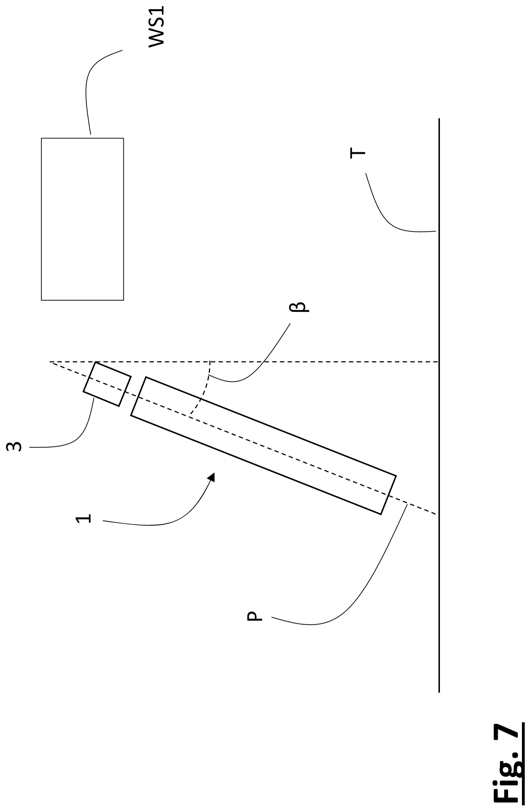

According to an aspect of the invention, see fig. 7, the plane P of the apparatus, is inclined at an angle β with respect to a plane vertical to the ground, in the range between 15° and 45°, preferably in the range of 25°-30°. Specifically, the angle β is defined by the above mentioned plane P and by a plane which is orthogonal to the ground, when the machine is in use, i.e. by a plane parallel to, or defined by, a longitudinal section of the machine.

The objects 3 comprise at least one magnetic element 33a, 33b and the apparatus comprise at least one movable magnetic attractor 4, 6a, 6b movable along a path 40 which has at least one portion 41 parallel to at least part of the return portion 22, 23, 24 of the track 2.

For the sake of simplicity, in the following discussion reference will be made to multiple magnetic elements 33a, 33b per each object 3. However, embodiments with a single magnetic element are not excluded, the latter being configured, for example, to interact with the linear electric motor 5 and with the movable magnetic attractors 4, 6a, 6b, which are better discussed later.

According to a preferred aspect, the objects comprise a seat 34 in which the magnetic elements 33a, 33b are mounted.

The seat 34 typically comprises two protrusions 34a, 34b opposite each other, on which magnetic elements 33a, 33b are mounted. Specifically, a first magnetic element 33a is mounted on a first protrusion 34a and a second magnetic element is mounted on the second protrusion 34b.

The magnetic elements 33a, 33b are preferably permanent magnets spaced from each other . Thus, the seat 34 forms a space 35 between the protrusions 34a, 34b and, as a result, between the magnetic elements 33a, 33b.

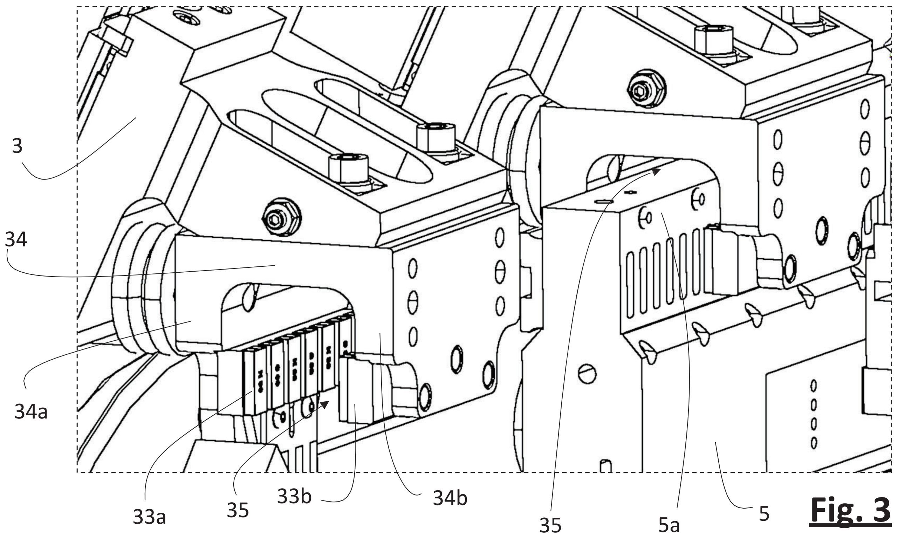

Preferably, the seat 34 is substantially shaped as a "C". At least part of portion 5a of the linear motor 5 is housed in the space defined by seat 34, as shown in fig. 3.

The apparatus further comprises several elements to move the objects 3 along the track 2.

Preferably, the apparatus comprises at least one linear electric motor 5 at the operative portion 21 of the track 2. Typically, in a known way, the linear electric motor 5 forms a magnetic field that interacts with the magnetic elements 33a, 33b, thus causing the respective object 3 to move. Thus, the linear electric motor 5 typically comprises a portion 5a that, under use condition, is intended to be inserted into the seat 34 of the objects 3, so as to be arranged between the two magnetic elements 33a, 33b. The linear electric motor 5 is usually arranged only at the operative portion of the track, so that, in the return portion there is provided no linear motor, i.e. the objects are not moved by means the linear electric motor 5 but are moved by means of the at least one movable magnetic attractor 4, 6a, 6b.

The magnetic attractors 4, 6a, 6b are preferably ferromagnetic elements, although the possibility of using magnets in at least part of the magnetic attractors 4, 6a, 6b is not excluded.

According to a preferred aspect, the movable magnetic attractors 4, 6a, 6b comprise primary movable magnetic attractors 4 movable along a path 40, which comprises at least one portion 41 parallel to at least part of the return portion 22, 23, 24, preferably to at least part of the linear portion 22 of the return portion 22, 23, 24 of the track 2.

In particular, the apparatus 1 is configured so that the primary movable magnetic attractors 4 can magnetically interact with magnetic elements 33a, 33b of the objects 3, preferably by being inserted into the seat 34 of the objects 3, that is, into the space 35 defined by the seat 34. Therefore, when a primary movable element 4 is arranged next to the magnetic elements 33a, 33b of the objects 3, the movement of the primary movable element 4 drags the respective object 3.

Although synchronizing the movement of the primary movable magnetic attractors 4 with that of the objects 3 is not necessary, it is however possible. Typically, the primary movable magnetic attractors 4 are moved continuously along the path 40 and, if they meet an object 3, they drag it along at least part of the linear return portion 22 of the track 2. As mentioned more than one group of attractors 4 may be present in a modular system of the plant.

Therefore, the objects 3 typically remain in a pick-up zone 45 waiting to be dragged by a primary movable magnetic attractor 4 along the linear return portion 22 of the track 2.

The apparatus 1 may comprise a pusher 7a, which is configured to push objects 3 to the zone where the primary movable magnetic attractors 4 are capable of dragging the objects 3. The pusher 7a can be made in a known way and typically comprises movable elements reciprocating along a linear path, such as by a mechanical (with springs or similar elements) and/or electrical control.

The primary movable magnetic attractors 4 can be moved by means of different solutions. A preferred embodiment provides primary movable magnetic attractors constrained to a conveyor belt 41, which defines the path 40.

The conveyor belt is moved in a known way, typically by means of an electric motor 42 that, for example, rotates a pulley which meshes, or otherwise drives, the conveyor belt 41.

As discussed, the conveyor belt 41 is typically moved regardless of the position of the objects 3. Therefore, when a primary movable magnetic attractor reaches the pick-up zone 45, if an object 3 is present, the former magnetically couples to the magnetic elements of the latter and drags the latter along the linear return portion 22. If no object 3 is present, the primary movable magnetic attractor 4 continues traveling along its path without dragging any object 3.

In particular, the conveyor belt is preferably moved continuously. However, sensors can be provided that detect the presence of an object 3 at the pick-up zone 45, so as to synchronize the movement of the conveyor belt 41 with the position of the objects 3.

It should be noted that the presence of multiple primary movable magnets 4 have been discussed. However, the apparatus is also operable with a single primary movable magnetic attractor 4, e.g., a single magnetic attractor constrained to the conveyor belt 41. This can be advantageous, or in any case sufficient, for example in the case in which the length of the linear portion 22 is short and/or in the case in which the primary movable magnetic attractor 4 has sufficient movement speed along the respective path 40.

In addition, the presence of one or more primary movable elements 4, such as elements placed at a distance from each other along the path 40, has been discussed. The possibility of having one or more movable magnets covering the entire path 40 is not excluded, so as to cancel, or at least reduce, the time spent waiting for objects at the pick-up zone 45. For example, the conveyor belt could be made from magnetic links configured to interact with the magnetic elements 33a, 33b of the objects 3, for example by entering the space 35 formed by the seat 34. In that case, the conveyor belt itself would act as the primary movable magnetic attractor 4. As discussed, the primary movable magnetic attractors 4 move the objects 3 along at least part of the linear portion 22 of the return portion of the track 2, but it is not excluded that these may move the objects 3 along other portions of the track as well.

For example, the conveyor belt 41 could be equipped with a plurality of pulleys, guides or transmissions, so that the path 40 would comprise, in addition to a portion parallel to the linear portion of the return portion 22 of the track 2, also portions parallel to at least one of the connecting portions 23, 24 of the track 2. In such a case, the pick-up zone 45 of the at least one primary movable magnetic attractor 4 could, for example, be shifted to an end of the operative portion 21 of the track 2.

It should also be noted that, in the case, for example, of very long paths it may be advantageous to have multiple series of primary movable magnetic attractors 4. For example, the apparatus 1 can be provided with multiple conveyor belts 41 arranged in series, which drag the objects 3 in series. This can also allow the speed to vary between primary movable magnets which are connected to different elements configured to move them. For example, different conveyor belts can be connected to different motors, or to the same motor by different reduction gears.

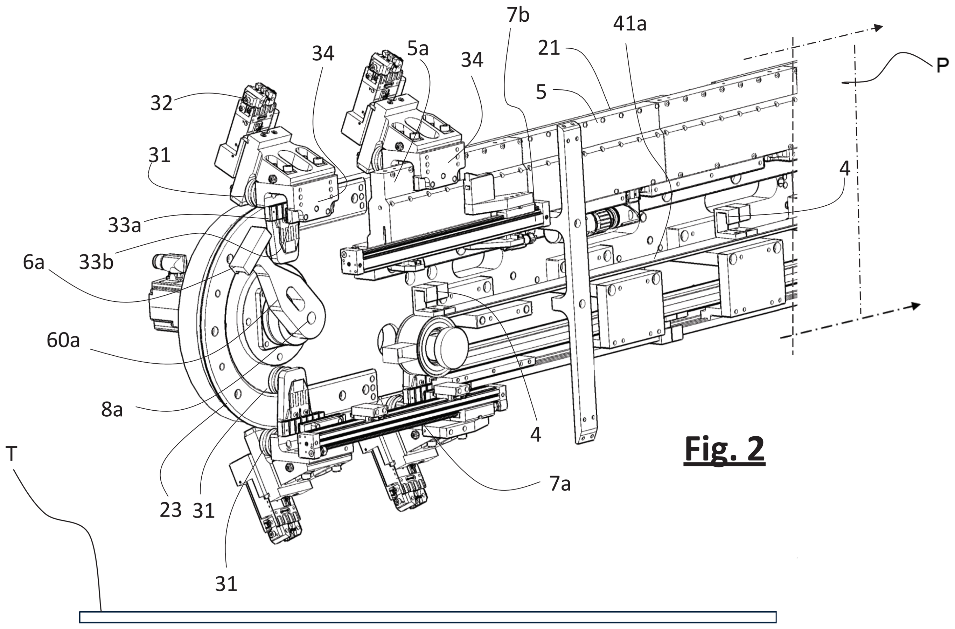

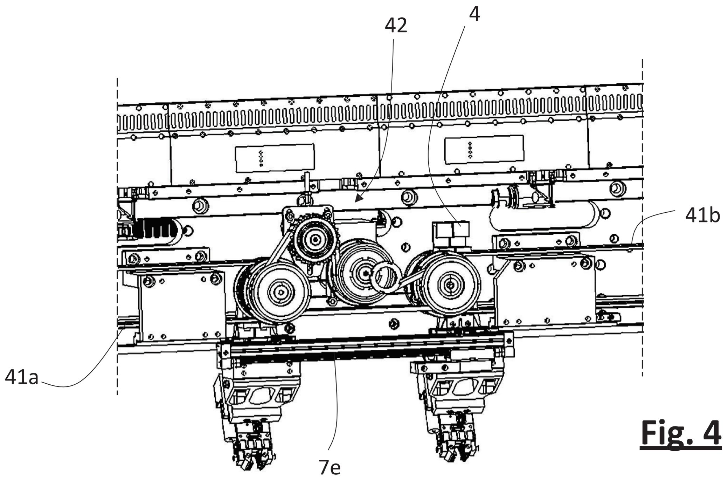

For example, in the embodiment shown in Figures 1 - 4, there are two conveyor belts 41. The first conveyor belt 41a receives the objects from the first connecting portion 23 and takes them to the second conveyor belt 41b, which takes the objects to the second connecting portion 24. It has to be noted that such a solution allows for a modular implementation of the apparatus 1, and of the relevant plant 100.

As mentioned, a module of the plant 100 can comprise a conveyor belt 41 for the return portion, one or more workstations WS1, WS2, and a portion of the linear motor 5, usually comprising a plurality of elements arranged in series. A frame, not shown in detail, is usually to provide to mount all these elements. As a result, by arranging a plurality of modules in series, a plant can be built.

Referring to fig. 1, it can be seen that the apparatus 1 (and thus the relevant plant) is made of two central modules A and B, each comprising a conveyor belt 41 for the return portion of the track 2 and a portion of the linear electric motor (made of seven elements of the linear electric motor 5) for the operative portion of the track 2. The apparatus 1 further comprises two further modules C, D, each carrying one of the curved parts of the return portion of the track. By adding further modules (e.g. between modules A and B) it is possible vary the length of the apparatus 1 and of the relevant plant 100, and it is also possible to vary the configuration of the working stations WS1, WS1 of the plant 100.

The apparatus 1 may be provided with pushers 7e configured to help the objects 3 to pass from one conveyor belt to the other.

However, the apparatus 1 preferably comprises secondary movable magnetic attractors 6a, 6b to move the objects 3 at the connecting portions 23, 24 of the return portion 22, 23, 24 of the track 2, i.e., elements that are movable separately (and independently) from the primary movable magnetic attractors 4.

The connecting portions 23, 24 are typically semi-circular, so that the secondary movable magnetic attractors 6a, 6b are preferably connected to movement elements configured to allow them to be moved along a circular path.

In a preferred embodiment, each secondary movable magnetic attractor is constrained to a crank 60a, 60b, each crank being rotatable about a respective pivot 8.

The cranks 60a, 60b can be rotated by 360°, always in the same direction or alternately along an arc of about 180°, so as to alternate between the first end 21a of the operative portion 21 and the first end 22a of the linear portion 22 of the return portion 22, 23, 24 of the track 2.

As with the secondary movable magnetic attractors 6a, 6b, sensors can be provided to synchronize the movement of the secondary movable magnetic attractors 4 with the position of the objects 3. However, similarly, a preferred solution provides that the movement of the secondary movable magnetic attractors 6a, 6b is independent of the position of the objects 3. Thus, if a secondary movable magnetic attractor 6a, 6b meets an object 3 along its path, it will drag the latter along the respective connecting portion 23, 24 of the track, otherwise it will complete its path uselessly.

A single crank 60a, 60b, and thus a single secondary movable magnetic attractor 6a, 6b, can be provided at each connecting portion, as in the figures.

Other solutions can be provided, such as multiple cranks coupled to the same pivot or a continuous wheel rotatable about a pivot, with the circumference provided with one or more magnets, which are either spaced apart or arranged continuously around the respective circumference.

In addition, in the event that a connecting portion does not make an arc of a circle, it is possible to arrange a respective movement element, such as a conveyor belt mounted on multiple pulleys or guides, which is configured to allow one or more secondary movable magnets 6a, 6b to travel a path parallel to the respective connecting portion, or which is in any case shaped so that the secondary movable magnetic attractor can drag an object along the connecting portion itself. Preferably, in the transition zone from the operative portion 21 to the first connecting portion 23 there is a pusher 7b, so as to facilitate the objects 3 to be released from the respective movement element (e.g., the linear motor 5) of the operative portion 21 and to facilitate the magnetic coupling with the secondary movable magnetic attractor 6a configured to move an object 3 along the first connecting portion 23.

Similarly, pushers 7c, 7d can be provided to facilitate the coupling to and/or decoupling from the secondary movable magnetic attractor 6b which is configured to move an object along the second connecting portion 24.

In general, in order to cause the objects to pass from the operating section 21 to the return section 22, 23, 24 and/or from the return section 22, 23, 24 to the operating section 21 of the track 2, one or more pushers can be provided.

It should be noted that, according to a preferred aspect, the apparatus 1 is configured so that the objects 3 do not come into contact with the movable magnetic attractors 4, 6a, 6b. It is also preferable that the objects 3 do not come into contact with the linear motor 5, if any.

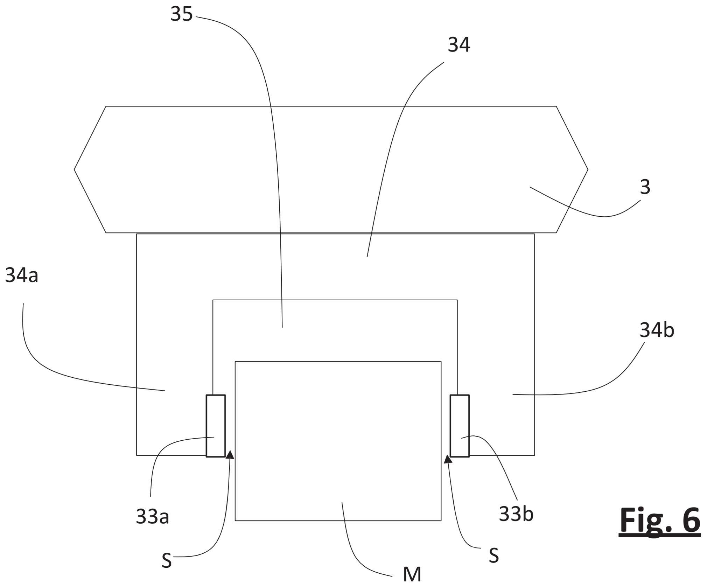

For example, this is schematically shown in Figure 6, in which a gap S can be seen between the magnetic elements 33a, 33b and a motor element M, which can be a movable magnetic attractor (e.g., a primary magnetic attractor 4 or a secondary movable magnetic attractor 6a, 6b) or a linear motor 5. In the case where the drive element is an electric motor, such as the linear motor 5, or a magnetic attractor, such as a primary movable magnetic attractor 4 or a secondary movable magnetic attractor 6a, 6b, the gap S can also be different. Typically, for all movable magnetic attractors in the apparatus, both primary and secondary, the gap S is identical.

A C-shaped seat having magnetic elements 33a, 33b opposite each other is schematically shown in Figure 6. However, preferably, there is a gap S also in other possible geometries and/or shapes of the objects, for example even in the case of a single magnetic element per object 3. The apparatus 1 may also comprise a recognition system 9 for recognizing the objects 3 which enter the operative portion 21. Such a recognition system can operate by known methods, such as by using RFID technology.

The apparatus can thus recognize which object is about to be moved along the operative portion 21, so as to be able to effectively control its movement, depending, for example, on the type of object and/or depending on the size thereof (e.g., also according to the difference in size due to construction tolerances within a set of objects that theoretically should have been identical). A plant 100 comprises an apparatus 1 and working stations WS1, WS2 configured to work on objects 3, and in particular on the elements carried by the objects 3.

The working stations WS1, WS2 are arranged at the operative portion 21 of the track 2. Therefore, the plant 100 typically also comprises devices configured to release and constrain these elements from and on the objects 3, downstream and upstream of the working stations WS1, WS2.

The apparatus 1 is preferably configured to carry cable ends by the objects 3. The working stations WS1, WS2 are therefore preferably configured to work, i.e., to carry out operations, on cable ends, usually electrical cables.

In use, an object 3 is moved along the operative portion 21 of the track 2. During this operation, the object (in particular the cable held by the object 3) is typically subjected to a series of operations by means of respective working stations WS1, WS2 that process the end of the cable.

During this operation, the object 3 is moved by at least one linear electric motor 5, which interacts with the at least one magnetic element 33a, 33b of the object 3, so as to move the object precisely, in particular at the respective working stations WS1, WS2 of the plant 100. Next, the object 3 is returned to the beginning of the operative portion 21 of the track 2 by the return portion 22, 23, 24. As above mentioned, for at least part of that return portion path, object 3 is moved by the interaction with at least one movable magnetic attractor 4, 6a, 6b.

As discussed, in a preferred solution, the return portion comprises a linear portion 22, and two connecting portions 23, 24, which connect the ends 22a, 22b of the linear portion 22 to the ends 21a, 21b of the operative portion 21.

In particular, an object 3 is preferably moved along at least part of the linear portion 22 by one or more primary movable magnetic attractors 4.

There are also secondary movable magnetic attractors 6a, 6b in the connecting portions 23, 24. Alternative solutions may provide different devices for moving objects along the connecting portions 23, 24. For example, in the first connecting portion the objects could be moved forward by gravity, possibly even by the pushing action of the pusher 7b or otherwise of the objects 3 coming out of the operative portion 21.

In the connecting portion 24, a series of objects 3 could be pushed by the pusher 7b and/or otherwise by the objects coming out of the linear portion 22, until they reach the operative portion 21.

In general, therefore, in the operative portion 21 the objects 3 are moved by means of a linear electric motor 5, whereas for at least part of the return portion 22, 23, 24, the movement of the objects is caused by the magnetic interaction between the objects 3 (and in particular the magnetic elements 33a, 33b of the objects 3) and the movable magnetic attractors 4, 6a, 6b. The solution described allows embodiments having different orientations of the apparatus 1, so that, e.g. in the operative portion, the objects are movement horizontally or in an inclined manner, or vertically. In other words, the electric linear motor usually moves the object in a horizontal plane, but it can be arranged so that the objects can overcome differences in height during their movement.

## Claims

1. Plant (100) for machining electrical cables comprising an apparatus (1) for moving cables, and one or more working stations (WS1, WS2) arranged at the operative portion of the track (2), configured to machine cable ends, wherein the apparatus (1) comprises a closed track (2), and objects (3) movable along said closed track (2), said track (2) comprising an operative portion (21) being arranged at said working stations (WS1, WS2), provided with two ends (21a, 21b), and a return portion (22, 23, 24), said objects (3) comprising at least one magnetic element (33a, 33b), said apparatus (1) comprising at least one linear electric motor (5) comprising an electromagnetic stator configured to translate said object (3) along at least part of said operative portion (21), so as to place the objects (3) at said working stations (WS1, WS2), and at least one movable magnetic attractor (4, 6a, 6b) movable along a path (40), said path (40) having a portion parallel to at least part of the return portion (22, 23, 24) of said track (2), the at least one movable magnetic attractor being configured to interact magnetically with the magnetic elements of the objects so as to move said objects (3) along at least part of the return portion (22, 23, 24) of said track (2) without contacting the objects, wherein said objects (3) are movable movers equipped with retaining elements to retain electrical cables.

2. Plant (100) according to claim 1, wherein said return portion (22, 23, 24) comprises a linear portion (22) provided with two ends (22a, 22b), and two connecting portions (23, 24), each connecting portion (23, 24) connecting an end (21a, 21b) of the operative portion (21) to an end (22a, 22b) of the return portion (22, 23, 24), said movable magnetic attractors (4, 6a, 6b) comprising primary movable magnetic attractors (4) for moving said objects (3) at least along said linear portion (22) of said return portion (22, 23, 24) of said track (2).

3. Plant (100) according to claim 2, comprising a pivot arranged at said connecting portions (23, 24), wherein said connecting portions (23, 24) are substantially semicircular, wherein said movable magnetic attractors comprise secondary movable attractors (6a, 6b) movable by rotating about said pivot along a circular path at said connecting portions (23, 24), said apparatus being configured so that the magnetic interaction between said secondary movable magnetic attractors (6a, 6b) and said at least one magnetic element of said object (3) cause said objects (3) to be moved along the respective connecting portion (23, 24) of said track (2).

4. Plant (100) according to one of the preceding claims, wherein, in order to constrain said cables, said objects comprise connections (32) shaped as clamps to retain the ends of a cable.

5. Plant (100) according to one of the preceding claims, configured so that, when one of said movable magnetic attractors (4, 6a, 6b) moves one of said objects (3), there is provided a gap (S) between said movable magnetic attractors (4, 6a, 6b) and the said at least one magnetic element (33a, 33b), so that the said objects (3) do not come into contact with the movable magnetic attractors (4, 6a, 6b).

6. Plant (100) according to one of the preceding claims, wherein said track (2) is in the form of a rail, and said objects (3) comprise wheels (31) that are configured to rotate along the track (2).

7. Plant (100) according to one of the preceding claims, wherein said objects (3) comprise at least two of said magnetic elements (33a, 33b) arranged within a seat, said apparatus (1) being configured so that said at least one movable magnetic attractor (4, 6a, 6b) may be arranged within said seat, so as to be arranged between said two magnetic elements.

8. Plant (100) according to one of the preceding claims, comprising a conveyor belt (41) configured to move the respective movable magnetic attractors (4, 6a, 6b) along a closed path (40), wherein at least part of said movable magnetic attractors (4, 6a, 6b) are constrained to said conveyor belt (41).

9. Plant (100) according to one or more of the preceding claims, comprising a recognition system (9) for recognizing the objects (3) which enter the operative portion (21).

10. Plant (100) according to one or more of the preceding claims, configured so that the longitudinal plane (P) of the apparatus (1) is arranged inclined with respect to the ground (T) considering the use condition by an angle preferably in the range between 15° and 45°, preferably in the range of 25°to 30°.

11. Plant (100) according to one or more of the preceding claims, comprising a plurality of modules (A, B), each of the modules (A, B) comprising:
- a portion of said linear electric motor (5);
- part of said return portion of the track;
- preferably a conveyor belt (41) configured to move the respective movable magnetic attractors (4, 6a, 6b) along a closed path (40), wherein at least part of said movable magnetic attractors (4, 6a, 6b) are constrained to said conveyor belt;
- at least one of said working stations (WS1, WS2), preferably a plurality of said working stations (WS1, WS2).

12. Process for machining electrical cables by means of a plant (100) according to one or more of the preceding claims, comprising the step of moving said objects (3) by means of said linear magnetic motor (5) in the operative portion (21) of the track, machining said cable at said working stations, and the step of moving said objects (3), for at least part of the return portion (22, 23, 24) of said track (2) by means of the magnetic interaction between the magnetic elements (33a, 33b) of the objects (3) and the at least one movable magnetic attractor (4, 6a, 6b).

13. Process according to claim 12, wherein the speed and/or the distance between objects in the operative portion of the track and/or in the return portion of the track varies over time.

14. Apparatus (1) comprising a closed track (2), and objects (3) movable along said closed track (2), said track (2) comprising an operative portion (21) provided with two ends (21a, 21b), and a return portion (22, 23, 24), said objects (3) comprising at least one magnetic element (33a, 33b), said apparatus (1) comprising at least one linear electric motor (5) adapted to move said objects (3) along at least part of said operative portion (21), and at least one movable magnetic attractor (4, 6a, 6b) movable along a path (40) which has a portion parallel to at least part of the return portion (22, 23, 24) of said track (2), the at least one movable magnetic attractor being adapted to move said objects (3) along at least part of the return portion (22, 23, 24) of said track (2).

15. Apparatus according to claim 14, wherein the at least one linear electric motor (5) comprises an electromagnetic stator configured to interact magnetically with said object so as to translate said object (3), wherein the at least one linear electric motor (5) is arranged only at the operative portion (21) of said track, and not at the return portion (22, 23, 24) of said track (2).

16. Apparatus according to claim 13 or 14, further comprising one or more apparatus features according to any claim 1 to 13.
